# EUROPEAN PATENT SPECIFICATION

(11) **EP 0 528 656 B1**
(45) Date of publication and mention of the grant of the patent: **06.11.1996**
(21) Application number: 92307446.2
(22) Date of filing: 12.08.1992
(51) Int. Cl.: A47J 27/21, H01H 37/16, H01H 37/22

(54) **Liquid heating vessels**
Flüssigkeitsheizvorrichtungen
Bouillaires

(30) Priority: 12.08.1991 GB 9117415
(43) Date of publication of application: 24.02.1993
(73) Proprietor: STRIX LIMITED, Ronaldsway, Isle of Man IM9 2RG (GB)
(72) Inventor: Taylor, John Crawshaw, Arbory, Isle of Man (GB)
(74) Representative: Jackson, Robert Patrick

(56) References cited:
- EP-A- 0 380 369
- EP-A- 0 510 863
- DE-A- 3 941 187
- FR-A- 973 017
- GB-A- 2 189 598
- GB-A- 2 222 025
- US-A- 3 147 369

## Description

The present invention relates to liquid heating vessels which are required to heat a liquid to its boiling point and also to a lower temperature. It is applicable to electric water heating vessels such as kettles and jugs which are used in making hot beverages such as tea and coffee.

While it is desirable that boiling water should be used for making tea, it is generally considered that water used in making coffee should ideally be somewhat below boiling, for example at 80°C to 90°C. Accordingly, it is common when making a coffee beverage to allow a boiled kettle or jug to stand for some time before pouring it on to the coffee. Alternatively, cold water can be added to the boiled water in the kettle or jug prior to pouring to reduce it to approximately the correct temperature. Both of these approaches are clearly inconvenient for the user, and whether or not the desired temperature is achieved can be a hit or miss affair.

It has also been proposed recently, in our UK Patent Application No. 9105718.2 (GB-A-2242614), to provide an electric kettle or jug which is divided internally by a partition arranged such that water is heated to different temperatures on either side of the partition and in particular when water on one side boils to provide vapour which causes an automatic steam sensitive switch to deactivate the heater, water on the other side of the partition is at a lower temperature. The arrangement is such that mixing then occurs on pouring to give water of an intermediate temperature, for use in making coffee. To provide boiling water, an opening is made in the partition to allow the water in both chambers to mix by convection during heating so that substantially all the water is at the boiling point by the time the heater is deactivated by the steam sensitive switch. This arrangement has the disadvantage however that the interior of the jug or kettle must be specially modified.

EP-A-380 369 discloses an electric water heating jug or kettle according to the preamble of claims 1 and 14. The jug is provided with an electronic controller to provide liquid at or below its boiling point (80°C).

It is also known to provide thermostats in some vessels (though typically not household jugs or kettles) to control water temperature at different predetermined temperatures. However, such thermostats can be relatively costly, and are inherently unsuited for use where one of the predetermined temperatures is intended to be the boiling point of the liquid since the boiling point varies depending on atmospheric pressure and altitude and on the hardness of the water, for example.

According to the present invention there is provided an electric water heating jug or kettle comprising a liquid heating vessel (1) having an electric heater, a manually resettable boiling control (7) coupled to an electrical switch means for interrupting the power supply to said heater when the liquid in said vessel boils, a thermally-sensitive control (20) including an actuator (21) arranged or arrangeable in thermal contact with liquid within said vessel and operable to interrupt the power supply to said heater at a predetermined liquid temperature which is below the boiling point, and means (12 etc) for selectively rendering the thermally-sensitive control inoperable or operable so that the vessel may be adapted to provide liquid at or below its boiling point as desired, characterised in that the boiling control comprises a first bimetallic actuator exposed to steam or vapour resulting from liquid within the container boiling and in that the thermally sensitive control (20) is variable such that it may be set by a user to operate at one of a range of liquid temperatures, and comprises a second bimetallic actuator located externally of the vessel.

Thus in accordance with the invention controls are provided for boiling a liquid, for example water, and for heating the liquid to a predetermined lower temperature. When it is desired to boil liquid in the vessel, which may be a hot water jug or kettle, the thermally-sensitive control is rendered inoperative, and the heater will be disconnected by the manually resettable boiling control in the manner of a traditional electric kettle or jug. However when liquid of a lower temperature is required eg. for making coffee, the thermally-responsive control is rendered operative so that the heater will be disabled by that control at the desired lower temperature. This overcomes the problems with thermostatic calibration mentioned above, and enables the cost-effective adaptation of jugs and kettles fitted with vapour activated boiling controls enabling them to be capable of selectively producing lower temperature liquid.

Vapour activated boiling controls are well known in the art, and are already used on large numbers of jugs and kettles. Typically such controls may comprise a bimetallic actuator upon which vapour or steam produced by the liquid boiling in the vessel impinges. The actuator is heated by the vapour condensing thereon, and when its temperature has risen sufficiently, it will operate to trip an over-centre lever which in turn cooperates with and opens a set of switch contacts in the power supply to the heater. Such controls are shown, for example, in our earlier UK Patent Applications GB 2221795, GB2215134, and UK Patent 1470367. The thermally-sensitive control may be of any construction which when operable will provide disconnection of the power supply to the heater when the liquid is at the desired temperature. Although the control may be such that once it operates, it must be positively reset by a user to reconnect the power supply to the heater, in one embodiment the control resets automatically when the sensed temperature falls below a given value whereby the control will cycle to maintain the liquid in the vessel at approximately the desired predetermined temperature.

Furthermore, the thermally-sensitive control is variable so that it may be set to operate at a variable desired liquid temperature. This may be useful if, for example, it is desired to produce white coffee with cold milk or cream which ideally requires non-boiling liquid of a somewhat higher temperature than black coffee, for example.

The means for rendering the thermally-sensitive control inoperative may vary. For example, it may comprise an electrical switch means for effectively bypassing the control. A further suitable means is adapted thermally to isolate the actuator of the control from liquid in the vessel, for example by interposing an insulating member between the actuator and the liquid, or by distancing the actuator from the liquid. In this way, although still connected electrically in the power supply to the heater the control will not operate to disconnect the heater before the boiling control operates. In an alternative system, a mechanical link between the actuator of the thermally-sensitive control and its electrical switch means may selectively be rendered ineffective.

The actuators of the boiling and thermally-sensitive controls may be located in any suitable position, and the controls may both be mounted to the vessel. The actuator of the thermally-sensitive control, when operable, is located in thermal contact with the liquid, eg. via a base or side wall of the vessel. In the case of a plastic vessel, thermal contact between the liquid and the actuator may be improved by including a thinner vessel wall portion, or a metal insert therein, in the vicinity of the actuator. The invention may also be readily embodied in so-called "cordless" electrical jugs or kettles wherein the heating vessel, rather than having a power lead directly connected to it, is removably locatable on a base unit to which the power supply is connected, and has an electrical connector for engagement with a corresponding connector on the base unit, to supply power to the heater. In accordance with a preferred embodiment of the invention, the boiling control is provided on the vessel itself while the thermally-sensitive control is provided in the base unit.

Preferably the thermally-sensitive control comprises an actuator mounted in an upper part of the base unit so that when the vessel is placed thereon, with the control in its operable condition, the actuator is placed in thermal contact with the base wall of the heating vessel to be responsive to the temperature of the liquid therethrough. Further, the actuator may be mounted in the base unit so as to be movable towards and away from the base of the heating vessel, such that when boiling liquid is required the actuator is sufficiently thermally isolated from the base of the heating vessel so that it will not operate before the liquid temperature in the vessel reaches its boiling point. The actuator may be moved by a cam connected to an operating lever provided on the base. An intermediate position or positions of the actuator may be provided whereby liquid may be heated to more than one predetermined temperatures below the boiling point e.g. for making black or white coffee as discussed above. In a preferred embodiment, the actuator is mounted within an upward projection in the base unit, and in its raised position directly engages a metal plate at the top of such projection which in turn directly engages the underside of the vessel in use.

In the case of a household kettle or jug, a preferred thermally-sensitive control may be adapted to heat the water to around 80 to 85°C for black coffee, and to around 90°C for white coffee.

As mentioned above, the thermally-sensitive control also comprises a bimetallic actuator, which at a certain nominal operating temperature displaces, preferably by snap action, to open a set of switch contacts of the control to interrupt the power supply to the heater. Controls of this general type are well known. Since the temperature of the bimetallic actuator will lag somewhat behind the actual temperature of the liquid in the vessel, the operating temperature of the bimetal will typically be somewhat below the desired predetermined temperature of the liquid depending on the degree of thermal contact between the liquid and the actuator. As discussed above, the bimetallic actuator is preferably arranged to cycle so that the switch contacts open and close and the heater operates intermittently to maintain the liquid at about the predetermined temperature if the vessel is left unattended.

In a further embodiment, which may be applied to a traditional jug or kettle as well as a cordless one, the actuator of the thermally-sensitive control, which in this system preferably is mounted in thermal contact with a side wall of the container, is coupled mechanically to an over-centre lever forming part of the boiling control, whereby in its operable condition the actuator of the thermally-sensitive control is adapted to trip the lever and disable the heater in the same manner as the boiling control. In such an arrangement, it will be appreciated that the thermally-sensitive control as defined herein shows certain components with the boiling control i.e. the over-centre lever and the associated switch contacts. Such system may include a mechanical link between the actuator and the over-centre lever which can be disengaged therefrom by suitable means for making tea, whereupon the over-centre lever will be tripped by the steam sensitive actuator in the normal way upon boiling.

In a preferred embodiment, the actuator of the thermally-sensitive control is coupled to the over-centre lever by means of a lever member which is selectively pivotable about an axis. Preferably, a pivot surface which is selectively engageable with and disengageable from a pivot provided on the lever is provided on a control member. The control member is preferably mounted on a support member so as to be slidably movable between the engaged and disengaged positions, and may extend through a suitable slot in a housing of the kettle or jug for operation by a user. When the pivot surface and pivot engage, operation of the actuator causes pivoting of the arm to trip the over-centre mechanism, but when they are disengaged, no pivotal movement takes place and the over-centre mechanism will instead be tripped by the boiling control actuator. Preferably the support member, lever and actuator are mountable as a unit to the boiling control. This allows a thermally-sensitive control to be added to a standard boiling control which may form part of an integrated control unit comprising also primary overheat and back-up protectors, as is well known in the art.

It will be appreciated that the invention also extends to a combined boiling and thermally-sensitive control for an electric water heating jug or kettle (1) having an electric heater, the control comprising a manually resettable boiling control (7) coupled to an electrical switch means for interrupting the power supply to said heater when the liquid in said vessel boils, and a thermally-sensitive control (20) including an actuator (21) arrangeable in use in thermal contact with liquid within said vessel (1) and operable to interrupt the power supply to said heater at a predetermined liquid temperature which is below the boiling point, and means for selectively rendering the thermally-sensitive control (20) inoperable or operable so that the vessel (1) may be adapted to provide liquid at or below its boiling point as desired, characterised in that the boiling control comprises a first bimetallic actuator exposed, in use, to steam or vapour resulting from liquid within the container boiling, and in that the thermally sensitive control (20) is variable such that it may be set by a user to operate at one of a range of liquid temperatures and comprises a second bimetallic actuator located externally of the vessel. Preferably said thermal-sensitive control is adapted to be be mountable to said boiling control as a unit.

As in the arrangement described above, the thermally-sensitive control may be coupled mechanically to an over-centre mechanism of the boiling control whereby operation thereof opens the boiling contacts. Other preferred features of the thermally-sensitive control may be as described above.

Some preferred embodiments of the invention will now be described, by way of example only, with reference to the accompanying drawings in which:
Fig. 1 shows a known cordless hot water jug to which the invention is applied; and
Fig. 2 shows schematically a modified base unit for use with the jug of Fig. 1, in accordance with the invention.
Fig. 3 shows, schematically, an exploded view of the thermally-sensitive control shown in Fig. 2;
Figs. 4A and 4B show the thermally-sensitive control of Fig. 3 in two operating conditions;
Figs. 5A to 5C show different positions of the thermally-sensitive control;
Fig. 6 shows a hot water jug embodying a second embodiment of the invention;
Fig. 7 shows the control shown in Fig. 6 in greater detail;
Fig. 8A shows a schematic, part sectional view of Fig. 7, looking from below; and
Figs. 8B and 8C show the control of Figs. 7 and 8A in two operating conditions.

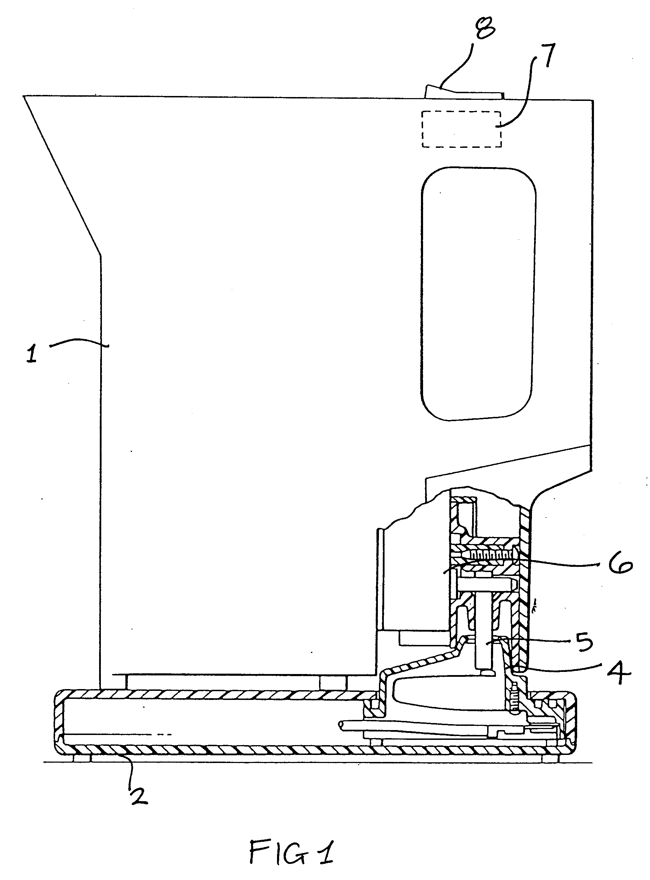

Fig. 1 shows a cordless hot water jug comprising a jug body 1 placed on a base unit 2. An electrical power lead 3 is connected to a female connector socket 4 in the base unit 2. A male pin connector 5 projects from the bottom of the jug body 1 for engagement with female socket connector 4 to supply power to the heating element (not shown). The jug 1 contains an overheat protection control unit 6 as is standard in the art, and also a vapour activated boiling control 7 (shown schematically) arranged in the upper part of the jug body 1 and which is in fluid communication with the liquid containing space of the jug body 1. The boiling control is of the general type previously described, having a snap-acting bimetallic actuator, and is arranged in the power supply to the element such that when it is activated by the steam produced when water in the jug boils, it interrupts the power supply to deactivate the element. Of course, the boiling control may be arranged as part of the overheat protector, with suitable ducting in the vessel walls to conduct vapour thereto. When it is desired to re-boil the jug, the control is reset manually using the on-off knob 8.

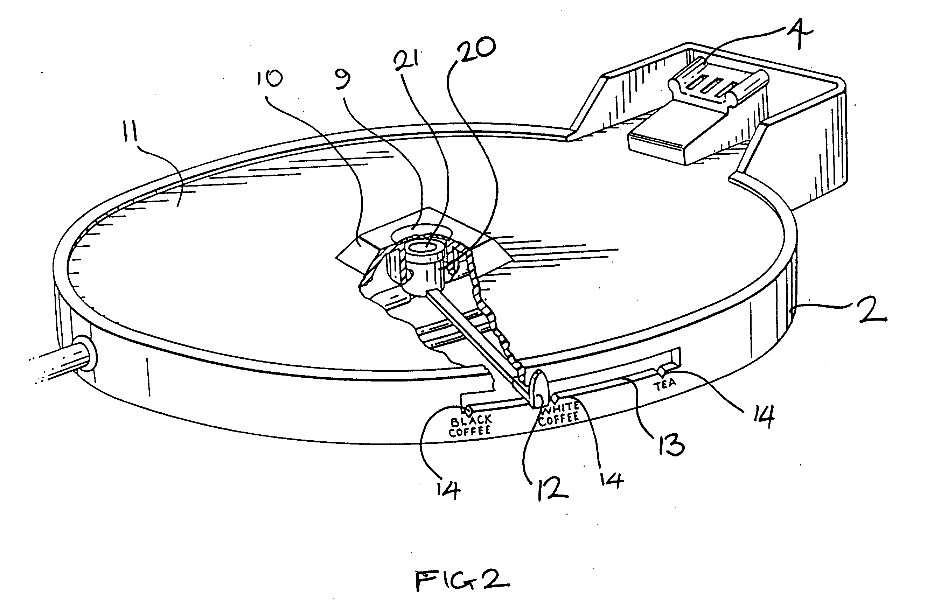

Turning now to Fig. 2, a modified base unit 2 is shown. In this embodiment of the invention, a thermally sensitive control 20, for de-energising the element when the water in the jug reaches a predetermined temperature below boiling, is arranged in the base unit 2. The control 20 is placed electrically in series with the female socket connector, and comprises a bimetallic actuator 21 which is movably mounted beneath a small metal plate 9 provided in the upper part of a tapering, square boss 10 extending from the upper surface 11 of the base 2. The metal plate 9 is arranged directly to engage the underside of the base wall of the jug 1 when it is placed on the base unit 2. In the case of a plastic jug, the base wall may include a region of reduced thickness adjacent the point of engagement with the plate 9 or alternatively a metal insert could be provided in the base wall to ensure adequate thermal contact in use between the plate 9 and the liquid within the jug. In the case of a metal jug or kettle, good thermal contact would be achieved in any event.

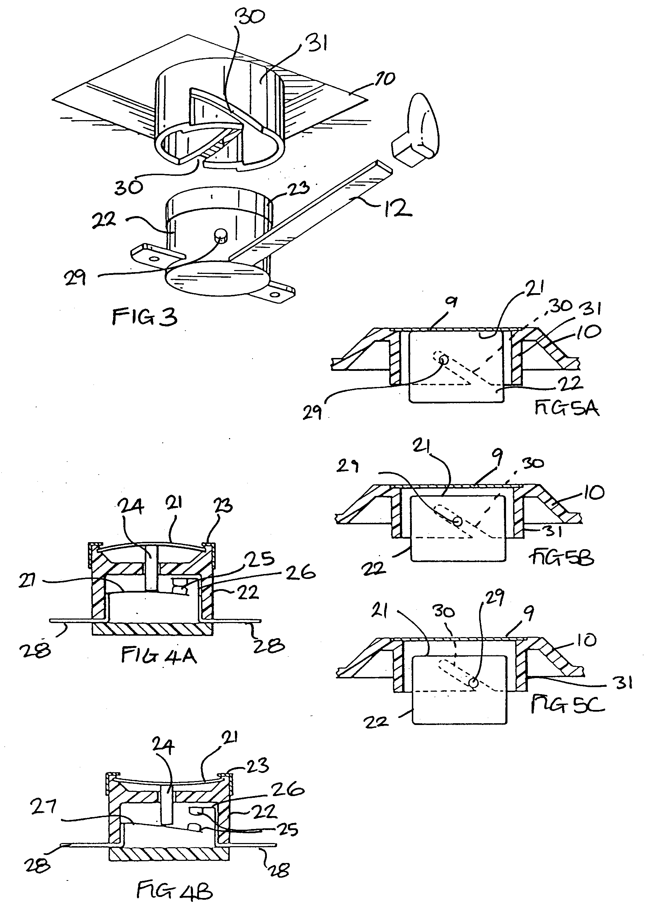

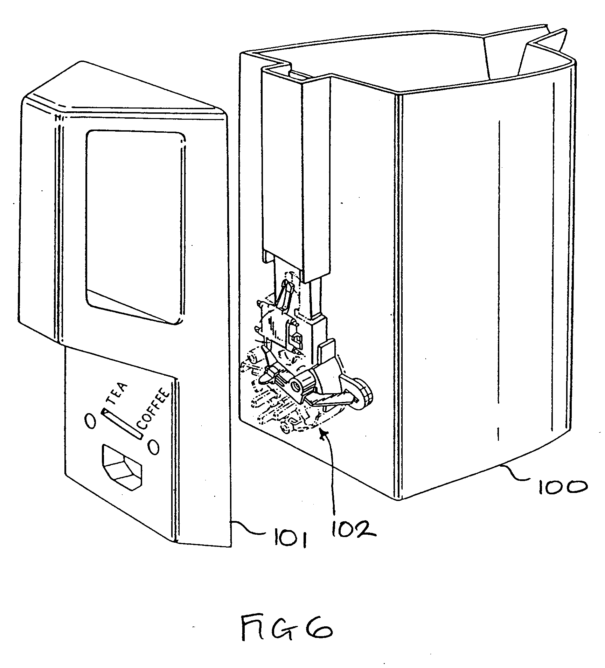

As can be seen in more detail from Figs. 3 to 5, the control 20 comprises a cylindrical body portion 22, having a snap-action bimetallic actuator 21 secured on its upper surface by an annular retaining member 23. As can be seen from Figs 4A and 4B, upon operation the bimetallic actuator 21 reverses its curvature with a snap-action to push downwardly a push rod 24 to open a set of resiliently biased contacts 25 provided at the respective ends of conductive strips 26,27, provided with connector tabs 28 for connection into the line side of the electrical supply to the connector 4. As will be seen from Figs. 5A to 5C, the whole control 20 is movable between a raised position (Fig. 5A) in which the actuator 21 directly engages the underside of the plate 9 and in use is thereby placed in good thermal contact with base wall of the jug and with the liquid therein, and one or more retracted positions (Figs. 5B,5C) in which it is spaced from the plate and is thermally more isolated from the liquid.

The unit 20 is movable through cam means by an operating lever 12 slidable in a slot 13 in the wall of the base 2. The cam means comprises a pair of diametrically opposed pins 29 extending radially from the cylindrical body portion 22 which engage with helical grooves 30 formed in a skirt 31 depending from the raised boss 10. The slot 13 is marked at one end with "black coffee", at the other end with "tea" and at an intermediate position with "white coffee", and notches 14 are provided at each location to retain the lever 12 at that location. When the lever 11 is at the "black coffee" position, the actuator assumes its raised position (Fig. 5A), in which it directly engages the plate 9 and is in good thermal contact with the base of a jug placed on the base unit 2. It will thus be heated as the temperature of water in the jug 1 increases, and has an operating temperature selected such that the thermally-sensitive control disconnects the power supply to the heating element when the desired predetermined water temperature, suitable for black coffee making (typically 80-85°C) is reached. The operating temperature of the actuator will vary depending on how good the thermal contact between it and the liquid is. For a metal jug, or one having a metal insert as discussed, the temperature of the actuator may not lag significantly behind that of the liquid during heating, and an operating temperature of about 80°C may be suitable. Where thermal contact between the liquid and actuator is achieved via a plastic jug base, a lower operating temperature of the actuator will be appropriate e.g. around 60°C. In the "tea" position (Fig. 5C) the actuator is displaced away from the plate 9 and will not, therefore, be in good thermal contact with the liquid in the jug 1. It will therefore not be heated sufficiently to operate the thermally-sensitive control before water boils in the jug 1, at which time the boiling control 7 will operate to de-energise the heating element in the manner of a traditional electric jug or kettle. In the intermediate "white coffee" position (Fig. 5B), the actuator assumes a position intermediate its two extreme positions whereby it will still be heated by the liquid in the jug, but more slowly than when it is in direct engagement with the plate 9, whereby the thermally-sensitive control will operate at a water temperature above the "black coffee" temperature but below boiling point, say at 90°C.

The thermally-sensitive control illustrated will automatically reset when the sensed temperature falls below the respective predetermined temperature so that in the "black coffee" or "white coffee" conditions, the heater cycles to main water within the jug 1 at about the desired, appropriate temperature.

An important advantage of the illustrated arrangement is that a modified base unit may be used with a substantially standard form of jug to render it operable at lower temperatures.

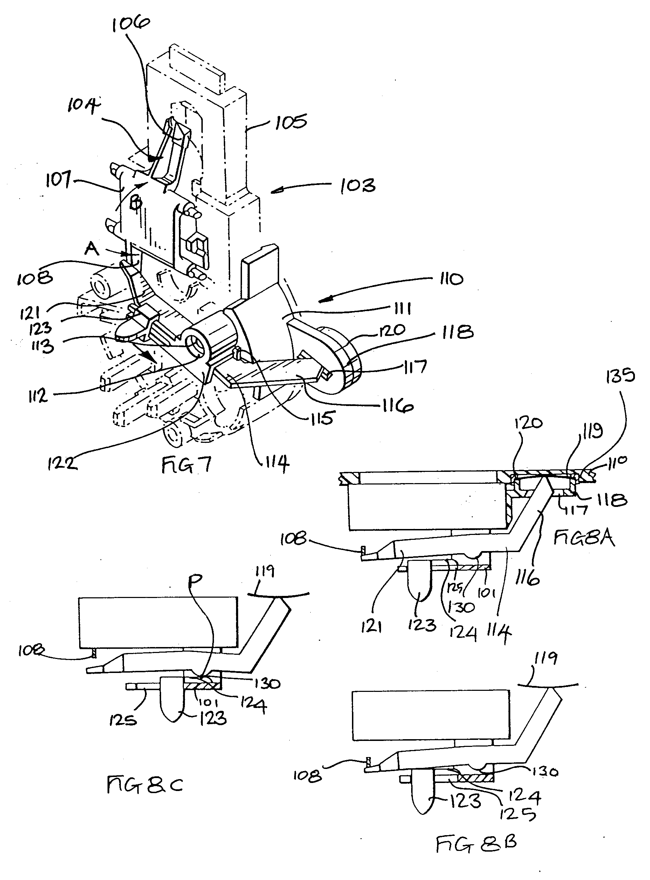

Figs 6 to 8 show a further embodiment of the invention, applied to a corded hot water jug.

Fig 6 shows a jug body 100 with its control cover/handle housing 101 removed to expose the jug control 102.

The control 102 is shown in more detail in Figs. 7 and 8, and comprises a conventional control unit 103 (sold under the applicant's commercial code R72) shown generally in chain lines, which combines the features of a boiling control, a primary overheat protector and a secondary, back-up protector. Such a control is described for example in GB-A-2181598. The control unit 103 includes a manually-resettable over-centre spring mechanism 104 which is acted upon by a bimetallic actuator (not shown) mounted at the upper part of the control body 105 and which is exposed, through suitable passageways in the wall of the jug body 100, to steam produced within the jug body when water with the jug body boils. When the bimetallic actuator operates it acts upon the upper arm 106 of a sprung, over-centre lever member 107 to cause it to pivot over-centre in the direction of arrow A. A lower arm 108 of the over-centre lever member 107 then acts, through a suitable linkage to open a set of electrical contacts in the control, so as to disconnect the power supply to the jug element. To re-connect the power supply, the over-centre lever member 107 must be pushed back over-centre in the direction of arrow B.

To allow the jug 100 to be used to heat water to a predetermined lower temperature, a further, thermally sensitive control 110 is mounted on the control unit 103.

The thermally-sensitive control 110 comprises a support body 111, having a mounting bore 112 which fits over a boss 113 formed on the control body 105 of the control unit 103. The support body 111 is suitably shaped to conform to the profile of the control body 105 so as to be located thereon in the correct angular orientation. In use, a screw (not shown) for mounting the cover housing 101 extend into the boss 113 and the support body 111 will be clamped in position thereby.

A pivot lever member 114 is mounted to the support body 111 by two clasps 115 (only one shown) arranged on opposite sides of the mounting bore 112. One arm 116 of the pivot lever member 114 extends through a slot 117 formed in the rear of a laterally extending lug 118 of the support body 111, and abuts a bimetallic actuator 119 which is mounted in this lug 118 by an annular retaining member 120. The actuator 119 is chosen to operate at a desired temperature below 100°C. As can be seen from Fig 8A the lug locates in a recess 135 formed in the vessel body wall 100 by local thinning thereof. By thinning the vessel wall in this region, heat transfer to the bimetallic actuator 119 is improved. The other arm 121 of the lever member 114 extends to the region of the lower arm 108 of the over-centre lever member 107. A pivot surface or block 130 is formed on the arm 121.

The support body 111 also comprises a bifurcated arm 122 upon which is slidably mounted a control member 123. The control member 123 is generally L-shaped and comprises a pivot surface 124 slidable along the back of the arm 122. The bifurcated arm 122 exerts a resilient force on the control member 123. When the jug is assembled the control member 123 extends through a slot 125 provided in the control housing 101.

As can be seen from Figs. 8B and 8C, the control member 123 is slidable from a first, tea making, position (Fig 8B) in which the pivot surface 124 is displaced from and does not contact the pivot surface 130 formed on the arm 121 of the lever member 124, and a second, coffee making, position (Fig 8C) in which it does. In the first position, (in which the control member will be positioned at the end of the slot 125 marked "tea") when the bimetallic actuator operates, reversing its curvature with a snap action, the lever member 114 is moved away from the jug body wall without pivoting so that the arm 108 of the over-centre lever member 107 will not be acted upon by the arm 121 of the lever member 114 to cause it to trip. The arm 108 will instead be tripped by the action of the steam sensitive bimetallic actuator, when liquid in the vessel boils. However, in the second position (in which the control member is at the other end of the slot 125, marked "coffee") the pivot surfaces 124, 130 together form a pivot axis P about which the lever member 114 may pivot. Thus when the bimetallic actuator 119 operates, the lever member 114 will then pivot about the axis P to trip the arm 108, and thus disconnect the power supply to the heater of the jug.

Unlike the first embodiment described, the thermally-sensitive control of this embodiment does not cycle but rather, to re-connect the power supply to the heater, the over-centre lever member 107 must be reset manually by a user.

Whilst in the embodiment described above, the thermally-sensitive control acts to open a set of contacts also opened by the boiling control, this is of course not essential. In an arrangement for example in which a jug or kettle is provided with an overheat protector unit comprising primary and back-up controls which operate in the event that the jug element overheats, and with a remote boiling control (for example in a position as shown schematically in Fig. 1) the thermally-sensitive control may be adapted to open contacts provided within the overheat protector unit through a suitable linkage.

## Claims

1. An electric water heating jug or kettle comprising a liquid heating vessel (1) having an electric heater, a manually resettable boiling control (7) coupled to an electrical switch means for interrupting the power supply to said heater when the liquid in said vessel boils, a thermally-sensitive control (20) including an actuator (21) arranged or arrangeable in thermal contact with liquid within said vessel and operable to interrupt the power supply to said heater at a predetermined liquid temperature which is below the boiling point, and means (12 etc) for selectively rendering the thermally-sensitive control inoperable or operable so that the vessel may be adapted to provide liquid at or below its boiling point as desired, characterised in that the boiling control comprises a first bimetallic actuator exposed to steam or vapour resulting from liquid within the container boiling and in that the thermally sensitive control (20) is variable such that it may be set by a user to operate at one of a range of liquid temperatures, and comprises a second bimetallic actuator located externally of the vessel.

2. A liquid heater apparatus as claimed in claim 1 wherein said means (12 etc) for rendering said thermally-sensitive control inoperable or operable comprises means for selectively thermally isolating the actuator of said control from the liquid in the vessel.

3. A liquid heater apparatus as claimed in claim 2 wherein said isolating means comprises means (29,30) for selectively distancing the actuator from the liquid.

4. A liquid heater apparatus as claimed in any preceding claim wherein the heating vessel (1) is removably locatable on a base unit (2) to which the power supply is connected, and which has an electrical connector (5) for engagement with a corresponding connector on the base unit (4), to supply power to the heater, and wherein said thermally-sensitive control is arranged in said base unit.

5. A liquid heater apparatus as claimed in claim 4 wherein the actuator (21) of said thermally-sensitive control (20) is mounted in an upper part of the base unit (2) so that when the vessel (1) is placed thereon, with the control (20) in its operable condition, the actuator is placed in thermal contact with the base wall of the heating vessel (1) to be responsive to the temperature of the liquid therethrough.

6. A liquid heater apparatus as claimed in claims 3 and 5 wherein said actuator (21) is mounted in the base unit (2) so as to be movable towards and away from the base of the heating vessel (1), such that when boiling liquid is required the actuator (21) is sufficiently thermally isolated from the base of the heating vessel (1) so that it will not operate before the liquid temperature in the vessel (1) reaches its boiling point.

7. A liquid heater apparatus as claimed in any preceding claim wherein said thermally-sensitive control (20) cycles so as to maintain the liquid in the vessel (1) at said predetermined lower temperature.

8. A liquid heater apparatus as claimed in any one of claims 1 to 3 wherein said thermally-sensitive control (20) is provided on said liquid heating vessel (1).

9. A liquid heater apparatus as claimed in claim 8 wherein said thermally-sensitive control is coupled mechanically to an over-centre lever forming part of the boiling control, whereby in its operable condition the actuator of the thermally-sensitive control is adapted to trip the lever and disable the heater in the same manner as the boiling control.

10. A liquid heater apparatus as claimed in claim 9 comprising a mechanical link between the actuator and the over-centre lever which can be disengaged therefrom by suitable means.

11. A liquid heater apparatus as claimed in claim 10 wherein said mechanical linkage comprises a lever member which is selectively pivotable about a pivot axis.

12. A liquid heater apparatus as claimed in claim 11 comprising a control member having a pivot surface for selective engagement with a pivot surface provided on said lever member to form said pivot axis.

13. A liquid heater apparatus as claimed in any of claims 8 to 12 wherein said thermally-sensitive control is mounted or mountable as a unit to the boiling control (7) or to a control unit including said boiling control (7).

14. A combined boiling and thermally-sensitive control for an electric water heating jug or kettle (1) having an electric heater, the control comprising a manually resettable boiling control (7) coupled to an electrical switch means for interrupting the power supply to said heater when the liquid in said vessel boils, and a thermally-sensitive control (20) including an actuator (21) arrangeable in use in thermal contact with liquid within said vessel (1) and operable to interrupt the power supply to said heater at a predetermined liquid temperature which is below the boiling point, and means for selectively rendering the thermally-sensitive control (20) inoperable or operable so that the vessel (1) may be adapted to provide liquid at or below its boiling point as desired, characterised in that the boiling control comprises a first bimetallic actuator exposed, in use, to steam or vapour resulting from liquid within the container boiling, and in that the thermally sensitive control (20) is variable such that it may be set by a user to operate at one of a range of liquid temperatures and comprises a second bimetallic actuator located externally of the vessel.

15. A combined boiling and thermally-sensitive control as claimed in claim 14 wherein said thermally-sensitive control (20) is mounted to said boiling control (7) as a unit.

16. A combined boiling and thermally-sensitive control as claimed in claim 14 or 15 wherein said control (20) comprises an over-centre lever, and further comprising a mechanical link between the actuator of said thermally-sensitive control and the over-centre lever which can be disengaged therefrom by suitable means.

17. A combined boiling and thermally-sensitive control as claimed in claim 16 wherein said mechanical linkage comprises a lever member which is selectively pivotable about a pivot axis.

18. A combined boiling and thermally-sensitive control as claimed in claim 17 comprising a control member having a pivot surface for selective engagement with a pivot surface provided on said lever member to form said pivot axis.

## Patentansprüche

1. Elektrischer Wasserheizkessel oder -kanne, umfassend: ein Flüssigkeitsheizgefäß (1) mit einer elektrischen Erhitzungsvorrichtung, eine manuell zurücksetzbare Siedesteuerung (7), die mit einem elektrischen Schaltmitte verbunden ist, um die Stromzufuhr zu der Erhitzungsvorrichtung beim Kochen der Flüssigkeit in dem Gefäß zu unterbrechen, eine thermo-empfindliche Steuerung (20), die ein Stellorgan (21) umfaßt, welches in thermischem Kontakt mit der Flüssigkeit in dem Gefäß angeordnet ist oder anzuordnen ist und betätigbar ist, um die Stromzufuhr zu der Erhitzungsvorrichtung bei einer vorbestimmten Flüssigkeitstemperatur, welche unter dem Siedepunkt liegt, zu unterbrechen und Mittel (12 etc.) zum selektiven außer oder in Betrieb setzen der thermoempfindlichen Steuerung, so daß das Gefäß angepaßt werden kann, Flüssigkeit in ihrem Siedepunkt oder darunter, wie gewünscht, bereitzustellen,
dadurch gekennzeichnet,
daß die Siedesteuerung ein erstes Bimetallstellorgan umfaßt, welches Dampf oder Wasserdampf ausgesetzt ist, der von der in dem Gefäß kochenden Flüssigkeit resultiert, und daß die thermo-empfindliche Steuerung (20) derart veränderlich ist, daß sie von einem Benutzer eingestellt werden kann, um bei einer Temperatur aus einem Bereich von Flüssigkeitstemperaturen zu arbeiten, sowie ein zweites Bimetallstellorgan umfaßt, welches sich außerhalb des Gefäßes befindet.

2. Flüssigkeitsheizvorrichtung nach Anspruch 1, bei welcher die Mittel (12 etc.) zum außer oder in Betrieb setzen der thermo-empfindlichen Steuerung Mittel umfassen, um das Stellorgan der Steuerung von der Flüssigkeit in dem Gefäß selektiv thermisch zu isolieren.

3. Flüssigkeitsheizvorrichtung nach Anspruch 2, bei welcher die Isolierungsmittel Mittel (29, 30) zum selektiven Distanzieren des Stellorgans von der Flüssigkeit umfassen.

4. Flüssigkeitsheizvorrichtung nach einem der vorhergehenden Ansprüche, bei welcher das Heizgefäß (1) entfernbar auf einer Basiseinheit (2) angeordnet werden kann mit welcher die Stromzufuhr verbunden ist, und die ein elektrisches Verbindungsstück (5) zum Eingriff mit einem korrespondierenden Verbindungsstück (4) an der Basiseinheit (2) aufweist, um der Erhitzungsvorrichtung Strom zuzuführen, und wobei die thermo-empfindliche Steuerung in der Basiseinheit angeordnet ist.

5. Flüssigkeitsheizvorrichtung nach Anspruch 4, bei welcher das Stellorgan (21) der thermo-empfindlichen Steuerung (20) in einem oberen Teil der Basiseinheit (2) angebracht ist, derart, daß, wenn das Gefäß (1) darauf gestellt wird und sich die Steuerung (20) in ihrem Betriebszustand befindet, das Stellorgan in thermischen Kontakt mit der Bodenwand des Heizgefäßes (1) angeordnet wird, so daß es durch diese hindurch auf die Temperatur der Flüssigkeit anspricht.

6. Flüssigkeitsheizvorrichtung nach Anspruch 3 und 5, bei welcher das Stellorgan (21) in der Basiseinheit (2) derart angebracht ist, daß es zu der Basis des Heizgefäßes (1) hin und von dieser weg beweglich ist, derart, daß, wenn kochende Flüssigkeit benötigt wird, das Stellorgan (21) von dem Boden des Heizgefäßes (1) ausreichend thermisch isoliert ist, so daß es nicht in Betrieb gehen wird bevor die Flüssigkeitstemperatur in dem Gefäß (1) ihren Siedepunkt erreicht.

7. Flüssigkeitsheizvorrichtung nach einem der vorhergehenden Ansprüche, bei welcher die thermo-empfindliche Steuerung (20) zyklisch arbeitet, um so die Flüssigkeit in dem Gefäß (1) auf einer vorbestimmten niedrigeren Temperaturen zu halten.

8. Flüssigkeitsheizvorrichtung nach einem der Ansprüche 1 bis 3, bei welcher die thermo-empfindliche Steuerung (20) an dem Flüssigkeitsheizgefäß (1) vorgesehen ist.

9. Flüssigkeitsheizvorrichtung nach Anspruch 8, bei welcher die thermo-empfindliche Steuerung mit einem Über-Zentrum-Hebel mechanisch verbunden ist, welcher einen Teil der Siedesteuerung bildet, wobei das Stellorgan der thermo-empfindlichen Steuerung in seinem Betriebszustand ausgeführt ist, um den Hebel auszulösen und die Erhitzungsvorrichtung in der gleichen Weise wie die Siedesteuerung abzuschalten.

10. Flüssigkeitsheizvorrichtung nach Anspruch 9, umfassend: eine mechanische Verbindung zwischen dem Stellorgan und dem Über-Zentrum-Hebel, der von diesem mittels geeigneter Mittel gelöst werden kann.

11. Flüssigkeitsheizvorrichtung nach Anspruch 10, bei welcher die mechanische Verbindung ein Hebelelement umfaßt, welches um eine Schwenkachse selektiv schwenkbar ist.

12. Flüssigkeitsheizvorrichtung nach Anspruch 11, umfassend ein Steuerelement mit einer Schwenkfläche zum selektiven Eingriff mit einer an dem Hebelelement vorgesehenen Schwenkfläche zur Bildung der Schwenkachse.

13. Flüssigkeitsheizvorrichtung nach einem der Ansprüche 8 bis 12, bei welcher die thermo-empfindliche Steuerung als eine Einheit an der Siedesteuerung (7) oder einer die Siedesteuerung (7) umfassenden Steuereinheit angebracht oder anbringbar ist.

14. Kombinierte Siede- und thermo-empfindliche Steuerung für eine elektrische Wasserheizkanne oder einen -kessel (1) mit einer elektrischen Erhitzungsvorrichtung, wobei die Steuerung umfaßt: eine manuell zurücksetzbare Siedesteuerung (7), die mit einem elektrischen Schaltmittel verbunden ist, um die Stromzufuhr zu der Erhitzungsvorrichtung beim Kochen der Flüssigkeit in dem Gefäß zu unterbrechen, eine thermo-empfindliche Steuerung (20), die ein Stellorgan (21) umfaßt, das im Betrieb in thermischem Kontakt mit der Flüssigkeit in dem Gefäß (1) anzuordnen ist und zum Unterbrechen der Stromzufuhr zu der Erhitzungsvorrichtung bei einer vorbestimmten Flüssigkeitstemperatur, welche unter dem Siedepunkt liegt, betätigbar ist, und Mittel zum selektiven außer oder in Betrieb setzen der thermo-empfindlichen Steuerung (20), so daß das Gefäß (1) angepaßt werden kann, um eine Flüssigkeit in ihrem Siedepunkt oder darunter, wie gewünscht, bereitzustellen, dadurch gekennzeichnet, daß die Siedesteuerung ein erstes Bimetallstellorgan umfaßt, das im Betrieb Dampf oder Wasserdampf ausgesetzt ist, welcher aus der in dem Gefäß siedenden Flüssigkeit resultiert, und dadurch, daß die thermo-empfindliche Steuerung (20) veränderlich ist, derart, daß sie von einem Benutzer eingestellt werden kann, um bei einer Temperatur eines Bereichs von Flüssigkeitstemperaturen zu arbeiten, und ein zweites Bimetallstellorgan umfaßt, das außerhalb des Gefäßes angeordnet ist.

15. Kombinierte Siede- und thermo-empfindliche Steuerung nach Anspruch 14, bei welcher die thermo-empfindliche Steuerung (20) als eine Einheit an der Siedesteuerung (7) angebracht ist.

16. Kombinierte Siede- und thermo-empfindliche Steuerung nach Anspruch 14 oder 15, bei welcher die Steuerung (20) einen Über-Zentrum-Hebel umfaßt und ferner umfassend eine mechanische Verbindung zwischen dem Stellorgan der thermo-empfindlichen Steuerung und dem Über-Zentrum-Hebel, der durch geeignete Mittel von diesem gelöst werden kann.

17. Kombinierte Siede- und thermo-empfindliche Steuerung nach Anspruch 16, bei welcher die mechanische Verbindung ein Hebelelement umfaßt, das selektiv um eine Schwenkachse schwenkbar ist.

18. Kombinierte Siede- und thermo-empfindliche Steuerung nach Anspruch 17 umfassend ein Steuerelement mit einer an dem Hebelelement vorgesehenen Schwenkfläche zum selektiven Eingriff mit einer Schwenkfläche zur Bildung der Schwenkachse.

## Revendications

1. Récipient ou bouilloire électrique pour faire chauffer l'eau, comprenant un récipient (1) pour faire chauffer le liquide, équipé d'un dispositif de chauffage électrique, d'une commande d'ébullition (7) pouvant être remise à l'état initial manuellement couplée à des moyens de commutation électriques pour couper l'alimentation en courant électrique fournie audit dispositif de chauffage lorsque le liquide dans ledit récipient bout, une commande thermosensible (20) comprenant un actionneur (21) agencé ou pouvant être agencé en contact thermique avec le liquide à l'intérieur dudit récipient et pouvant être actionné pour couper l'alimentation en courant électrique fournie audit dispositif de chauffage à une température de liquide prédéterminée située en dessous du point d'ébullition, et des moyens (12, etc.) pour rendre de manière sélective la commande thermosensible actionnable ou non de façon à ce que le récipient puisse être adapté à fournir le liquide à son point d'ébullition ou en dessous, comme désiré, caractérisé en ce que la commande d'ébullition comprend un premier actionneur bimétallique exposé à la buée ou à la vapeur provenant de l'ébullition du liquide contenu dans le récipient et en ce la commande thermosensible (20) est variable de telle sorte qu'elle peut être réglée par un utilisateur afin de fonctionner à une température parmi une gamme de températures de liquide, et comprend un second actionneur bimétallique situé à l'extérieur du récipient.

2. Dispositif pour faire chauffer un liquide selon la revendication 1, dans lequel lesdits moyens (12, etc.) pour rendre la commande thermosensible actionnable ou non comprennent des moyens destinés à isoler thermiquement de manière sélective l'actionneur de ladite commande du liquide du récipient.

3. Dispositif pour faire chauffer un liquide selon la revendication 2, dans lequel les moyens d'isolation comprennent des moyens (29, 30) destinés à éloigner de manière sélective l'actionneur du liquide.

4. Dispositif pour faire chauffer un liquide selon l'une quelconque des revendications précédentes, dans lequel le récipient de chauffage (1) peut être placée de manière amovible sur une unité de base (2) à laquelle est connectée l'alimentation en courant électrique, et qui possède un connecteur électrique (5) permettant sa mise en prise avec un connecteur correspondant sur l'unité de base (4), afin de fournir du courant électrique à la résistance chauffante, et dans lequel ladite commande thermosensible est agencée dans ladite unité de base.

5. Dispositif pour faire chauffer un liquide selon la revendication 4, dans lequel l'actionneur (21) de ladite commande thermosensible (20) est monté sur une partie supérieure de l'unité de base (2) de telle sorte que lorsque le récipient (1) est placé dessus, avec la commande (20) en position de fonctionnement, l'actionneur est placé en contact thermique avec la surface du fond du récipient de chauffage (1) afin d'être sensible à la température du liquide à l'intérieur du récipient.

6. Dispositif pour faire chauffer un liquide selon les revendications 3 et 5, dans lequel ledit actionneur (21) est monté dans l'unité de base (2) afin de pouvoir être déplacé vers et depuis la base du récipient de chauffage (1), de telle sorte que lorsque l'ébullition du liquide est requise, l'actionneur (21) soit suffisamment isolé thermiquement de la base du récipient de chauffage (1) pour qu'il ne se déclenche pas avant que la température du liquide à l'intérieur du récipient (1) n'ait atteint son point d'ébullition.

7. Dispositif pour faire chauffer un liquide selon l'une quelconque des revendications précédentes, dans lequel ladite commande thermosensible (20) est cyclique de façon à maintenir le liquide contenu dans le récipient (1) à ladite température inférieure prédéterminée.

8. Dispositif pour faire chauffer un liquide selon l'une quelconque des revendications 1 à 3, dans lequel ladite commande thermosensible (20) est prévue sur ledit récipient (1) de chauffage de liquide.

9. Dispositif pour faire chauffer un liquide selon la revendication 8, dans lequel ladite commande thermosensible est couplée mécaniquement à un levier à détente brusque formant une partie de la commande d'ébullition, dans lequel lorsqu'il est en position de fonctionnement, l'actionneur de ladite commande thermosensible est conçu pour déplacer le levier et désactiver la résistance chauffante de la même manière que la commande d'ébullition.

10. Dispositif pour faire chauffer un liquide selon la revendication 9, caractérisé en ce qu'il comprend une liaison mécanique entre l'actionneur et le levier à détente brusque qui peut en être désolidarisé par des moyens appropriés.

11. Dispositif pour faire chauffer un liquide selon la revendication 10, dans lequel ladite liaison mécanique comprend un élément de levier qui peut pivoter de manière sélective autour d'un axe de pivotement.

12. Dispositif de chauffage de liquide selon la revendication 11, comprenant un élément de commande ayant une surface de pivotement pour permettre sa mise en prise sélective avec une surface de pivotement prévue sur ledit élément de levier pour former ledit axe de pivotement.

13. Dispositif pour faire chauffer un liquide selon l'une quelconque des revendications 8 à 12, dans lequel ladite commande thermosensible est montée ou peut être montée comme unité sur la commande d'ébullition (7) ou sur une unité de commande comprenant ladite commande d'ébullition (7).

14. Commande d'ébullition et thermosensible combinée destinée à un récipient électrique pour le chauffage de l'eau ou bouilloire (1) équipée d'un dispositif de chauffage électrique, ladite commande comprenant une commande d'ébullition (7) pouvant être remise à l'état initial manuellement couplée à des moyens de commutation pour couper l'alimentation en courant électrique fournie audit dispositif de chauffage lorsque le liquide dans ledit récipient bout, et une commande thermosensible (20) comprenant un actionneur (21) pouvant, en service, être agencé en contact thermique avec le liquide contenu dans ledit récipient (1) et pouvant être actionné pour couper l'alimentation en courant électrique fournie audit dispositif de chauffage à une température de liquide prédéterminée située en dessous du point d'ébullition, et des moyens pour rendre de manière sélective la commande thermosensible (20) actionnable ou non de telle sorte que le récipient puisse être adapté à fournir le liquide à son point d'ébullition ou en dessous, comme désiré, caractérisée en ce que la commande d'ébullition comprend un premier actionneur bimétallique exposé, en service, à la buée ou à la vapeur provenant de l'ébullition du liquide contenu dans le récipient et en ce la commande thermosensible (20) est variable de telle sorte qu'elle peut être réglée par un utilisateur afin de fonctionner à une température parmi une gamme de températures de liquide, et comprend un second actionneur bimétallique situé à l'extérieur du récipient.

15. Commande d'ébullition et thermosensible combinée selon la revendication 14, dans laquelle ladite commande thermosensible (20) est montée comme unité sur ladite commande d'ébullition (7).

16. Commande d'ébullition et thermosensible combinée selon les revendications 14 ou 15, dans laquelle ladite commande (20) comprend un levier à détente brusque, et caractérisée en ce qu'elle comprend en outre une liaison mécanique entre l'actionneur de ladite commande thermosensible et le levier à détente brusque qui peut en être désolidarisé par des moyens appropriés.

17. Commande d'ébullition et thermosensible combinée selon la revendication 16, dans laquelle ladite liaison mécanique comprend un élément de levier qui peut pivoter de manière sélective autour d'un axe de pivotement.

18. Commande d'ébullition et thermosensible combinée selon la revendication 17, comprenant un élément de commande ayant une surface de pivotement pour permettre sa mise en prise sélective avec une surface de pivotement prévue sur ledit élément de levier pour former ledit axe de pivotement.
